# EUROPEAN PATENT APPLICATION

(11) **EP 4 015 213 A1**
(43) Date of publication of application: **22.06.2022**
(21) Application number: 20215175.9
(22) Date of filing: 17.12.2020
(51) Int. Cl.: B32B 17/10

(54) **LAMINATED GLASS COMPRISING AN INTERLAYER FILM WITH SOUNDDAMPENING PROPERTIES**

(71) Applicant: Kuraray Europe GmbH, 65795 Hattersheim (DE)
(72) Inventor: HAERTH, Michael, 53859 Niederkassel (DE); KELLER, Uwe, 77210 Avon (FR)
(74) Representative: Janßen, Christian Oliver

(57) **Abstract**

The present invention relates to interlayer films, especially monolayer interlayer films, with excellent sound-dampening properties comprising polyvinyl butyral.

## Description

The present invention relates to interlayer films with excellent sound-dampening properties comprising polyvinyl butyral.

It is well known that vibration and sound transmission behaviour of laminated safety glass composed of two plies of glass and a polymeric interlayer depends mostly on glass thickness, interlayer thickness and the coupling and damping effectiveness of the latter at a given temperature.

Conventional films comprising plasticized polyvinyl butyral (PVB) exhibit rather low sound dampening effects. Thus, it has been long known in the industry to use multi-layer laminates for so-called "acoustic glass". Generally, a trilayer interlayer is used comprising two harder outer layers and a softer core layer. Said core layer is usually made from plasticizer-rich and thus, softer polyvinyl butyral. However, such trilayer interlayers are more demanding in the production process and thus, of higher cost than standard monolayer PVB interlayers.

On the other hand, it is difficult to provide a monolayer with a suitable softness because of the saturation limit of plasticizer in the polyvinyl butyral. If this limit of plasticizer is reached, it will bleed out from the interlayer over time, especially under cold conditions.

Therefore, WO02/102591 suggests monolayer interlayers comprising PVB together with a plasticizer and a non-ionic surfactant. While these monolayers lead to a certain reduction in sound transmission, there is still a need in the industry for improved interlayers for sound dampening glazing.

Thus, object of the present invention was an improved interlayer for sound-dampening laminated glass using a more economic process, e.g. in terms of time and/or cost, a more flexible process and/or a laminated glass with improved properties, especially with improved sound-dampening, bleed-out and/or interlayer surface roughness properties.

These and other problems have been solved by the present invention.

Now therefore, the present invention concerns an interlayer film comprising a polyvinyl acetal, a plasticizer and a non-ionic surfactant wherein
a. the polyvinyl alcohol content of the polyvinyl acetal is from 15 to 20 wt%,
b. the concentration of the non-ionic surfactant is from 5 to 15 wt%, and c. the total concentration of plasticizer and non-ionic surfactant combined is from 30 to 50 wt%; and wherein the wt% of the plasticizer and/or the non-ionic surfactant are based on the total weight of the interlayer film.

The aldehyde used for the production of the polyvinyl acetals can be a linear or branched aldehyde comprising 2 to 10 carbon atoms. Specifically, the polyvinyl acetal is polyvinyl butyral.

Preferably, the residual polyvinyl alcohol content of the polyvinyl acetal is from 18.5 to 19.4 wt%.

The residual polyvinyl alcohol content is measured according to ASTM D1396.

The amount of residual polyvinyl acetate groups in the polyvinyl acetal is from 0.1 to 20 mol%, preferably 0.5 to 3 mol%, or 5 to 8 mol%.

Preferably, the concentration of plasticizer is from 25 to 40 wt%.

Suitable plasticizers are selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols comprising ether compounds, dialkyl sebacates, such as dibutyl sebacate, and also esters of sebacic acid with cycloaliphatic ester alcohols or ester alcohols comprising ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticizers shall be organic liquids having a high boiling point. For this reason, further types of organic liquids having a boiling point above 120 °C can also be used as plasticiser.

Especially preferred is triethylene glycol-bis-2-ethyl hexanoate (3GO or 3G8).

Also preferably, the concentration of the non-ionic surfactant is from 7.5 to 10.0 wt%, most preferably from 8.0 to 9.0 wt%.

Suitable non-ionic surfactants include but are not limited to ethoxylated aliphatic or aromatic alcohols containing at least 6 carbon atoms in the alcohol portion, with an average degree of ethoxylation greater than or equal to 2. Preference is given to ethoxylated aliphatic or aromatic alcohols containing from 8 to 20 carbon atoms in the alcohol portion, with an average degree of ethoxylation of from 3 to 10.

Examples of said suitable non-ionic surfactants for the purposes of the invention are MARLOPHEN^{®} NP 6, a nonylphenol with an average degree of ethoxylation of 6, MARLIPAL^{®} 0 13/40, a fatty alcohol with an average degree of ethoxylation of 4, and ISOFOL 12+5 EO, a 2-butyloctanol with an average degree of ethoxylation of 5. Another example is Berol^{®} 840, a narrowly distributed tetraethoxylated C8 alcohol from Nouryon. Moreover, Ethylan 1003, Ethylan 1005 of Nouryon (both ethoxylated C10 Guerbet alcohols carrying respectively about 3 and 5 EO units), Berol 260 or Berol 266 (ethoxylated C9-11 alcohols with about 4 and 5.5 EO units, respectively), Berol 360 (C10 alcohols with about 4 units) and Berol 366 (C10 alcohols with about 5.5 EO units). In general, narrow distributed ethoxylates are preferred but standard ethoxylates such as BASF's Lutensol XP range of products are suitable as well (e.g. Lutensol XP 30, XP 40, XP 50, XP 60).

Most preferably, the non-ionic surfactant is an ethoxylated C9-C11 alcohol.

Also preferably, the bleed out at 5 ºC as measured according to the method given below is below 1.0 wt% of the total amount of plasticizer and non-ionic surfactant after 30 days.

Especially in case of windshields for use with head-up displays, the interlayer film according to the invention can have a wedge shape. Thus, the thickness in the upper region (near the roof) can be different to the thickness in the lower region. Generally, the thickness in the upper region is higher than in the lower region. The thickness increase can be the same over the whole length of the windshield. Alternatively, it can have one or more plateaus, especially a plateau near the upper and/ or the lower edge. Also, the thickness increase can be increasing or decreasing from the lower to the upper edge.

The interlayer films can also contain further additives, such as residual quantities of water, UV absorber, antioxidants, adhesion regulators, optical brighteners or fluorescent additives, stabilisers, colorants, processing aids, inorganic or organic nanoparticles, pyrogenic silicic acid and/or surface active substances.

In another aspect, the present invention concerns a laminated glass comprising the interlayer film as described above between two sheets of glass.

Preferably, the interlayer according to the invention is the only interlayer film present between the two sheets of glass. Thus, interlayer between the two sheets of glass consists of the interlayer film according to the present invention. To this end, the present invention also concerns a method to provide a sound-dampening glazing wherein the interlayer film according to the invention is the only film laminated between two sheets of glass. Such glazing can be used in architectural windows, single and multi-pane windows, indoor and outdoor windows, vacuum insulated glass windows, and safety glass windows in buildings, homes, hotels, offices, and other similar structures; windshields, side windows, sun roofs, and back windows for various vehicles.

The present invention also relates to a method for producing the sound-dampening glass laminates between two sheets of glass.

The lamination step is preferably carried out such that the interlayer film is positioned between two glass sheets and the layered body thus prepared is pressed under increased or reduced pressure and increased temperature to form a laminate.

To laminate the layered body, the methods with which a person skilled in the art is familiar can be used with and without prior production of a pre-laminate.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

The interlayer films are generally produced by extrusion with use of a cast-film line. Here, a surface roughness may also be produced by controlled melt fracture or with the cast-film method additionally by use of a structured chill roll and/or structure back roll. Films used in accordance with the invention preferably have a surface structure with a roughness Rz from 0 to 100 µm, preferably Rz from 20 to 60 µm, most preferably from 25 to 45 µm.

### Examples

### Methods

### Measurement of polyvinyl alcohol content

The polyvinyl alcohol content of the polyvinyl acetal was determined in accordance with ASTM D 1396-92.

### Measurement of Rz

The surface property Rz of the film was measured according to DIN EN ISO 4287.

### Measurement of the damping behaviour

In order to quantify the coupling and damping properties of the films, the impedance test according ISO PAS 16940 was used on laminate beams of 25 x 300 mm with two plies of 2.1 mm soda lime glass at precisely 20 °C. Loss factor and resonance frequency of mode 1 and 2 were evaluated.

### Measurement of bleed out of plasticizer

In order to obtain a smooth surface of the PVB films, the interlayers were autoclaved with PET films between the glass plie and the interlayer films. After that the glass plies and the PET films were removed and the smooth PVB film was cut into 30 x 100 mm stripes. The stripes were pre-conditioned at 23 °C and 28 % r.H. for 24 hours to ensure comparable moisture content. After determination of the exact weight of the stripes, they were stored in a glass desiccator under the following conditions at 5 °C and at 23 °C for 30 days. An atmosphere of high relative humidity was obtained by means of a saturated aqueous solution of copper sulphate pentahydrate with undissolved solid. After 30 days the plasticizer on the surface of the film was removed and the strips were reconditioned at 23 °C and 28 % r.H. for 24 hours. The bleed out is calculated as the difference in wt% between the weight before and after the points of weighting. If the plasticizer loss as described hereabove is equal to or less than 1 wt% of the total combined wt% of plasticizer and non-ionic surfactant in the compositions, the bleed-out test is considered passed. In case the bleed out is calculated to be more than 1 wt% of the total of plasticizer and non-ionic surfactant present, the test is considered as failed.

### Preparation

### Preparation of the interlayer films

Compositions with the components as listed in table 1 were prepared. The polyvinyl butyral used had a residual acetate content of 1.1 wt% determined in accordance with DIN ISO 53401. The interlayer films were produced by film extrusion using a Leistritz co-rotating double-screw extruder. The melt temperature before the die was 176 °C. The films were extruded through a flat slit die with a slit width of 1100 mm and cooled down in a water basin. The obtained film showed a thickness of around 0.74 mm.

Test laminates were produced with conventional 2.1 mm automotive grade soda lime glass (Planiclear^{®}) in an autoclave containing the following steps: 30 min heating phase with pressurization up to 12 bar, 30 min hold time at 12 bar and 140 °C., and 30 min cooling down phase to 40 °C with concomitant release of pressure.

**Table 1: Compositions and test results**

| | **E1** | **C1** | **C2** |
|---|---|---|---|
| **Recipe** | | | |
| PVB/wt% | 65.5 | 65.5 | 65.5 |
| PVOH content/wt% | 19.3 | 20.5 | 20.5 |
| 3G8/wt% | 25.875 | 25.875 | 25.875 |
| Berol 260/wt% | 8.625 | 8.625 | - |
| Isofol 12 + 5 EO/wt% | - | - | 8.625 |
| Tinuvin 326/wt% | 0.075 | 0.075 | 0.075 |
| Songnox 2450 PW/wt% | 0.0365 | 0.0365 | 0.0365 |

| **Surface roughness** | | | |
|---|---|---|---|
| Rz upper side/µm | 29 | 29 | 37 |
| Rz lower side/ µm | 30 | 28 | 37 |

| **Acoustics** | | | |
|---|---|---|---|
| frequency f1/Hz | 175 | 177 | 182 |
| frequency f2/Hz | 864 | 886 | 926 |
| loss factor (f1) | 0.19 | 0.17 | 0.12 |
| loss factor (f2) | 0.25 | 0.24 | 0.20 |

| **Bleed out** | | | |
|---|---|---|---|
| 5 °C, 30 days/wt% | Pass | Fail | Fail |
| 23 °C, 30 days / wt% | Pass | Pass | Fail |

The results of the measurement of the test laminates are given in table 1. Comparison of example E1 according to the invention with comparative example C1 shows that using a polyvinyl butyral with a residual PVOH content of below 20 wt% not only leads to a highly improved performance in the bleed out test (especially at lower temperatures) but also, and even more surprisingly, to a an improved sound dampening effect as shown by the improved loss factors.

Additionally, use of the specifically preferred non-ionic surfactants with a relatively short alkyl chain (C₉ to C₁₁) surprisingly leads to a rather low surface roughness of 28 to 30 µm. In contrast, using a longer alkyl chain (C₁₂) non-ionic surfactant as in comparative example C2 leads to a substantially higher roughness of 37 µm. This surface roughness is introduced during the extrusion by an effect called melt fracture which is caused inter alia by the rheology of the polymer melt. In order to reduce the surface roughness of comparative example C2, the temperature of the die lip would have to be increased as compared to example E1 in order to alter the melt fracture formation and therefore surface roughness. However, an increase in die lip temperature increases energy costs and moreover, can lead to an increased decomposition of the polymer as well as to an increase in so-called die drips, which lead to contamination of the interlayer film

Additionally, the specifically preferred short-chain alkyl non-ionic surfactants surprisingly lead to substantially improved results in both the bleed-out test and the sound-dampening test.

## Claims

1. An interlayer film comprising a polyvinyl acetal, a plasticizer and a non-ionic surfactant wherein
a. the polyvinyl alcohol content of the polyvinyl acetal is from 15 to 20 wt%,
b. the concentration of the non-ionic surfactant is from 5 to 15 wt%, and
c. the total concentration of plasticizer and non-ionic surfactant combined is from 30 to 50 wt%; and
wherein the wt% of the plasticizer and/or the non-ionic surfactant are based on the total weight of the interlayer film.

2. The interlayer film according to claim 1 wherein the concentration of plasticizer is from 25 to 40 wt%.

3. The interlayer film according to claim 1 or 2 wherein the plasticizer is chosen from the group of esters of polyvalent aliphatic or aromatic alcohols.

4. The interlayer film according to any one of the claims above wherein the plasticizer is triethylene glycol-bis-2-ethyl hexanoate.

5. The interlayer film according to any one of the claims above wherein the concentration of the non-ionic surfactant is from 7.5 to 10.0 wt%.

6. The interlayer film according to any one of the claims above wherein the non-ionic surfactant is an ethoxylated C₉-C₁₁ alcohol.

7. The interlayer film according to any one of the claims above wherein the polyvinyl alcohol content of the polyvinyl acetal is from 18.5 to 19.4 wt%.

8. The interlayer film according to any one of the claims above wherein the polyvinyl alcohol is polyvinyl butyral.

9. The interlayer film according to any one of the claims above wherein the bleed out as measured according to the description at 5 ºC is below 1.0 wt% of the total amount of plasticizer and non-ionic surfactant after 30 days.

10. The interlayer film according to any one of the claims above wherein the interlayer film has a wedge shape.

11. A laminated glass comprising the interlayer film according to any one of claims 1 to 10 between two sheets of glass.

12. The laminated glass according to claim 11 wherein the interlayer between the two sheets of glass consists of the interlayer film according to any one of claims 1 to 10.

13. A method to provide a sound-dampening windshield wherein the interlayer film according to any one of claims 1 to 10 is the only film laminated between two sheets of glass.
